# EUROPÄISCHE PATENTSCHRIFT

(11) **EP 3 092 148 B1**
(45) Veröffentlichungstag und Bekanntmachung des Hinweises auf die Patenterteilung: **26.12.2018**
(21) Anmeldenummer: 14824022.9
(22) Anmeldetag: 30.12.2014
(51) Int. Cl.: B60L 11/18, H02J 7/00, H02J 1/10, H02J 1/04, H01M 10/42

(54) **ELEKTROCHEMISCHER SPEICHERVERBUND**
ELECTROCHEMICAL COMPOSITE STORAGE SYSTEM
COMPOSITE ACCUMULATEUR ÉLECTROCHIMIQUE

(30) Priorität: 10.01.2014 DE 102014200336
(43) Veröffentlichungstag der Anmeldung: 16.11.2016
(73) Patentinhaber: Robert Bosch GmbH, 70442 Stuttgart (DE)
(72) Erfinder: BUTZMANN, Stefan, 58579 Schalksmühle (DE)
(86) Internationale Anmeldenummer: PCT/EP2014/079418
(87) Internationale Veröffentlichungsnummer: WO 2015/104200

(56) Entgegenhaltungen:
- WO-A1-2013/046314
- DE-A1-102009 046 605
- US-A- 4 502 000
- US-A1- 2012 319 657
- VARIOUS AUTHORS: "LTC3780 - High Efficiency, Synchronous, 4-Switch Buck-Boost Controller", ANNOUNCEMENT LINEAR TECHNOLOGY, XX, XX, 1. Januar 2005 (2005-01-01), Seiten 1-28, XP002422285,

## Beschreibung

### Stand der Technik

Die vorliegende Erfindung betrifft einen elektrochemischen Speicherverbund umfassend mehrere elektrochemische Speichermodule. Insbesondere betrifft die vorliegende Erfindung einen elektrochemischen Speicherverbund, welcher eingerichtet ist, mehrere parallel geschaltete Stränge von Speichermodulen ohne ein Auftreten ungleicher Ladungszustände bzw. unerwünschter Ausgleichsströme zu betreiben.

Im Stand der Technik sind elektrochemische Speichermodule mit einer einfachen Halb- oder Vollbrücke als Kopplungseinheit bekannt. Mit Hilfe solcher Module kann die Klemmenspannung eines jeweiligen Moduls in gewissen Grenzen eingestellt werden. Eine Stromregelung ist mit solchen Einheiten hingegen nicht möglich. Aus dem Dokument DE 10 2013 222 289 A1 ist weiter ein als UniBB-Modul bezeichnetes Speichermodul bekannt, welches aus einer oder mehreren Akkumulatorzellen zusammen mit einer Kopplungseinheit besteht, wobei die Kopplungseinheit auch eine Induktanz enthält. Dieses Modul kann sowohl als Spannungs- wie auch als Stromquelle verwendet werden. Da ein solches Modul für Spannungen unter 60 V ausgelegt ist, müssen insbesondere für Anwendungen, die recht große Leistungsanforderungen haben (z.B. Fahrzeuge der Automobilindustrie), mehrere Module in Reihe geschaltet werden, um die verfügbare Leistung bei beherrschbarem Strom zu erreichen. Zusätzlich kann es notwendig sein, diese seriellen Stränge zur weiteren Erhöhung des verfügbaren Stromes einander parallel zu schalten. Die Parallelschaltung von Strängen führt jedoch im Normalfall gemäß dem Stand der Technik aufgrund generell ungleicher Ladungszustände zu unerwünschten

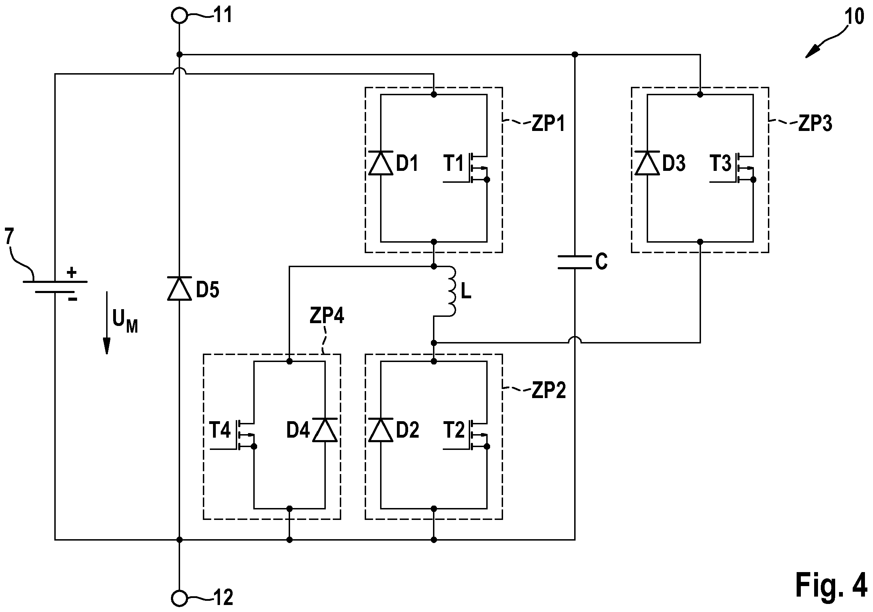

Ausgleichsströmen zwischen den Strängen. Auf einen möglichen Aufbau eines UniBB-Moduls wird weiter unten in Verbindung mit Figur 4 genauer eingegangen.

Jedes der Dokumente WO 2013/046314 A1 und EP 2 763 270 A1 zeigt ein System zum Bereitstellen elektrischer Energie. Das System stellt elektrische Energie einer Last zur Verfügung. Das System umfasst eine erste Vorrichtung zum Speichern elektrischer Energie, eine zweite Vorrichtung zum Speichern elektrischer Energie und einen Wandler zum Durchführen einer bidirektionalen Spannungsumwandlung zwischen der ersten und der zweiten Vorrichtung. Die erste und die zweite Vorrichtung sind jeweils in Form einer Batterie mit mehreren in Reihe geschalteten Batteriezellen ausgebildet. Wenn die erste und die zweite Vorrichtung parallel geschaltet sind, wird ein von dem Wandler bereitgestellter Strom mittels einer Steuerung so gesteuert, dass ein aktueller Stromwert des von der ersten Vorrichtung bereitgestellten Stroms mit einem aktuellen Sollstromwert übereinstimmt.

Dokument US 2012/0319657 A1 zeigt ein System mit einer Vielzahl von Batteriemodulen. Die Batteriemodule sind parallel zueinander angeordnet. Jedes Batteriemodul umfasst wenigstens eine Batterie, eine Batteriemanagementschaltung und einen bidirektionalen DC-DC-Konverter. Dabei ist jede Batteriemanagementschaltung dazu ausgebildet, einen Zustand des entsprechenden Batteriemoduls als Ganzes und/oder einen Zustand jeder Batterie des entsprechenden Batteriemoduls zu überwachen. Ferner ist jeder DC-DC-Konverter durch die entsprechende Batteriemanagementschaltung so ansteuerbar, dass ein Entladen und/oder ein Laden der wenigstens einen Batterie jedes Batteriemoduls anhand von Befehlen von der entsprechenden Batteriemanagementschaltung mittels des entsprechenden DC-DC-Konverters einstellbar ist. Dabei kann jeder DC-DC-Konverter ein bekannter Buck-Boost-Konverter sein.

Dokument DE 10 2009 046 605 A1 zeigt ein Energieübertragersystem für ein Energiespeichersystem. Das Energieübertragersystem umfasst eine Mehrzahl von Gleichstromstellermodulen. Die Gleichstromstellermodule weisen jeweils eine ausgangsseitige Serienschaltung mehrerer Gleichstromsteller mit je einem ersten und einem zweiten Modul-Ausgang auf. Jeder der Gleichstromsteller weist einen ersten und einen zweiten Eingang zum Anschließen eines Energiespeichermoduls des Energiespeichersystems auf. Die Gleichstromstellermodule sind ausgangsseitig parallel geschaltet.

Dokument US 4,502,000 A zeigt eine Batterieanlage. Die Batterieanlage umfasst eine Vielzahl von Batteriesträngen, die mittels gemeinsamer Busleitungen parallel geschaltet sind und jeweils eine Vielzahl in Reihe geschalteter Batterien umfassen. Jeder Batteriestrang umfasst eine magnetische Schaltung. Dabei sind die magnetischen Schaltungen dazu ausgebildet, die von den Batteriesträngen zwischen den Busleitungen angelegten Spannungen untereinander anzugleichen.

Dokument XP 002422285 zeigt einen Buck-Boost-Regler, bei dem eine Eingangsspannung kleiner als eine Ausgangsspannung, gleich mit der Ausgangsspannung oder größer als die Ausgangsspannung sein kann.

Es ist eine Aufgabe der vorliegenden Erfindung, einen elektrochemischen Energiespeicher bereitzustellen, der modular aufgebaut ist und die Nachteile des Standes der Technik ausräumt.

### Offenbarung der Erfindung

Die vorstehend genannte Aufgabe wird erfindungsgemäß durch einen elektrochemischen Speicherverbund, umfassend parallel geschaltete Stränge elektrochemischer Speichermodule, gelöst. Die elektrochemischen Speichermodule können dabei eine elektrochemische Speicherzelle oder mehrere elektrochemische Speicherzellen und eine Verarbeitungseinheit umfassen. Mittels der Verarbeitungseinheit ist das Speichermodul eingerichtet, in der elektrochemischen Zelle bzw. den elektrochemischen Zellen gespeicherte elektrische Energie mit der Charakteristik einer Spannungsquelle und/oder einer Stromquelle an ausgangsseitigen Klemmen des Speichermoduls bereitzustellen. Hierzu weist das Speichermodul erste Anschlussklemmen und jeweils eine elektrische Schaltung auf, wobei der elektrochemische Speicherverbund (u.A.. mittels der elektrischen Schaltung) eingerichtet ist, die Stränge innerhalb des elektrochemischen Speicherverbundes wahlweise als Stromquelle oder als Spannungsquelle zu betreiben. Hierzu kann der elektrochemische Speicherverbund weiter eine (den Speichermodulen übergeordnete) Verarbeitungseinheit aufweisen, mittels welcher Steuerbefehle an die einzelnen Speichermodule gesendet und deren Energieabgabecharakteristik somit individuell eingestellt werden können. Über die wahlweise Ansteuerung als Stromquelle oder als Spannungsquelle kann verhindert werden, dass zwischen den parallel geschalteten Strängen keine unerwünschten Ausgleichsströme fließen. Zudem kann gezielt ein Ladungsausgleich ungleicher Ladungszustände zwischen den Strängen gesteuert werden.

Ferner ist der elektrochemische Speicherverbund eingerichtet, ein erstes Speichermodul eines betrachteten Stranges als Stromquelle zu betreiben und ein weiteres Speichermodul desselben Stranges als Spannungsquelle oder in einem Bypassmodus zu betreiben. Auf diese Weise können Ausgleichsströme zwischen den Strängen verhindert werden, da eine genaue Spannungskontrolle erfolgen kann.

Die Unteransprüche zeigen bevorzugte Weiterbildungen der Erfindung.

Insbesondere können die als Spannungsquelle fungierenden Speichermodule als ungeregelte Spannungsquellen arbeiten. Wie viele der Speichermodule als Spannungsquelle fungieren, hängt von der Höhe der geforderten Gesamtspannung ab, welche von dem Strang bzw. dem elektrochemischen Speicherverbund zu liefern ist. Die Kontrolle erfolgt dabei in einer Weise, die für jeden möglichen Ladezustand der Stränge die gleiche Spannungslage stabilisiert. Auf diese Weise werden alle Speichermodule desselben Stranges in beliebiger Kombination als Spannungsquelle oder in einem Bypassmodus betrieben.

Bevorzugt ist der elektrochemische Speicherverbund eingerichtet, jeweils einen ersten Strang in Reihe geschalteter Speichermodule als Spannungsquelle und einen zweiten Strang elektrochemischer Speichermodule als Stromquelle zu betreiben. Indem der zweite Strang als Stromquelle betrieben wird, ist ein vom eingestellten Strom unabhängiger Stromfluss durch den zweiten Strang nicht möglich. Unerwünschte Ausgleichsströme werden somit vermieden.

Alternativ oder zusätzlich kann der elektrochemische Speicherverbund eingerichtet sein, mit Ausnahme des ersten Strangs alle Stränge des Speichermoduls als Stromquelle oder in einem Sperrmodus zu betreiben. Mit anderen Worten ist der erste Strang weiterhin als Spannungsquelle geschaltet, während alle übrigen Stränge entweder die Charakteristik einer Stromquelle aufweisen oder gesperrt (also unterbrochen) sind. Auf diese Weise können im gesamten elektrochemischen Speicherverbund keine unerwünschten Ausgleichsströme fließen. Ungleiche Ladungszustände können überdies gezielt vermieden bzw. ausgeglichen werden.

Bevorzugt kann für das im Stromquellenmodus arbeitende Speichermodul sowohl der Buck- wie auch der Boost-Modus gewählt werden. Dies hängt von den Ladezuständen der Zellen in den Strängen ab. Auf diese Weise wird gewährleistet, dass keine Ausgleichsströme zwischen den parallel geschalteten Strängen fließen. Je nach Ansteuerung der Module ist ein Betrieb als Gleich- oder Wechselstromquelle der parallel geschalteten Stränge möglich, wobei sie synchronisiert gesteuert werden, um gleiche Spannungen aufzuweisen, so dass sich die Ströme addieren können.

Bevorzugt weist jeder der Stränge des Speicherverbundes einen Schütz auf, über welchen der jeweilige Strang eingerichtet ist, in den Speicherverbund eingebunden oder von dem Speicherverbund elektrisch getrennt zu werden. Die Ansteuerung der Schütze kann durch die Speichermodule des Strangs selbst erfolgen, sofern eines der Speichermodule einen Defekt erkennt und ein Abschalten des Schützes im Strang signalisiert. Alternativ oder zusätzlich kann ein jeweiliger Schütz auch durch eine den Strängen übergeordnete Verarbeitungseinheit angesteuert werden. Dies ermöglicht eine flexible Anpassung an von dem elektrochemischen Speicherverbund zu liefernder Ströme und eine Abschaltung defekter Stränge.

Bevorzugt sind die Speichermodule als UniBB-Module ausgeführt. UniBB-Module ermöglichen eine Vielzahl unterschiedlicher Charakteristiken der elektrischen Klemmenleistung bei Verwendung ein und desselben elektrochemischen Energiespeichers innerhalb des UniBB-Moduls. Ihr elektrischer Aufbau ist kostengünstig, die Ansteuerung einfach und ihre Langlebigkeit führt zu einem hochwertigen elektrochemischen Speicherverbund. Zudem ist eine modulare Erweiterbarkeit des elektrochemischen Speicherverbundes insbesondere dann gegeben, wenn sämtliche Speichermodule als UniBB-Module ausgeführt sind.

Gemäß einem zweiten Aspekt der vorliegenden Erfindung wird eine elektrische Schaltung, umfassend einen elektrischen Verbraucher und einen ersten Speicherverbund sowie einen zweiten Speicherverbund, vorgeschlagen. Beide Speicherverbünde können als elektrochemische Speicherverbünde ausgeführt sein, wie sie oben im Detail beschrieben worden sind. Erfindungsgemäß ist der Verbraucher elektrisch zwischen dem ersten Speicherverbund und dem zweiten Speicherverbund angeordnet. Mit anderen Worten wird ein erster Anschluss des Verbrauchers an einem ersten Ausgang des ersten Speicherverbundes angeschlossen und ein zweiter Anschluss des Verbrauchers an einen ersten Anschluss des zweiten Speicherverbundes angeschlossen. Die jeweiligen zweiten Anschlüsse des ersten und zweiten Speicherverbundes können beispielsweise mit einer elektrischen Masse verbunden sein. Zusätzlich kann der Verbraucher durch einen Schalter überbrückt werden. Zusätzlich kann zwischen dem Verbraucher und den ersten Anschlüssen der elektrochemischen Speicherverbünde ein zweiter Schalter und ein dritter Schalter vorgesehen sein, um den Verbraucher von den elektrochemischen Speicherverbünden zu trennen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung einer elektrischen Schaltung, umfassend einen einzelnen Strang in Reihe geschalteter Speichermodule;
- Figur 2: eine elektrische Schaltung gemäß einem Ausführungsbeispiel der vorliegenden Erfindung;
- Figur 3: eine elektrische Schaltung gemäß einem zweiten Ausführungsbeispiel der vorliegenden Erfindung; und
- Figur 4: ein schematischer Aufbau eines Ausführungsbeispiels eines Speichermoduls in Form eines UniBB-Moduls.

### Ausführungsformen der Erfindung

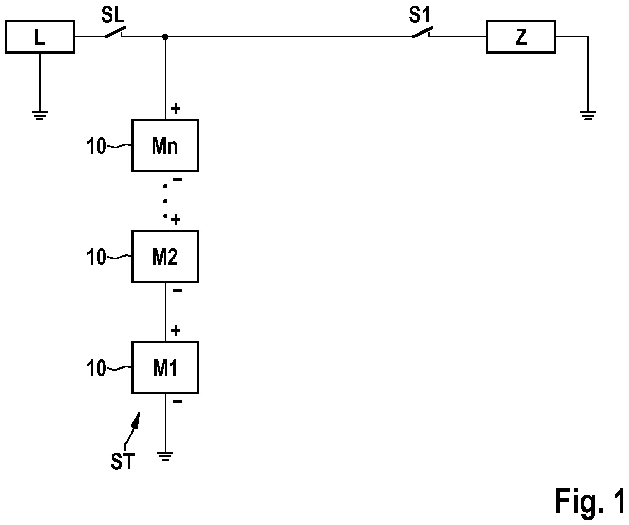

Figur 1 zeigt ein Schaltbild eines schematischen Aufbaus einer seriellen Schaltung von UniBB-Modulen 10 als Speichermodule. Die Speichermodule sind mit M1, M2 und Mn bezeichnet. Selbstverständlich könnten mehrere Speichermodule hinzugefügt werden, um die Strangspannung zu erhöhen. Parallel zum Strang ST der UniBB-Module 10 ist ein Zweig, umfassend ein Ladegerät L und einen ersten Schalter SL, sowie ein weiterer Zweig, umfassend einen Verbraucher Z und einen zweiten Schütz S1 vorgesehen. Die UniBB-Module 10 sind elektrisch gleichsinnig orientiert. Dabei ist der jeweilige Minuspol eines UniBB-Moduls 10 in Richtung der elektrischen Masse des Strangs ST orientiert, während der Pluspol in Richtung der beiden übrigen Stränge weist. Eine (nicht dargestellte) Verarbeitungseinheit ist eingerichtet, die Module M1, M2, Mn wahlweise als Spannungsquelle im Buck- oder Boost-Modus, Stromquelle im Buck- oder Boost-Modus, in einen Bypass-Lade- oder Sperrmodus zu bringen. Die Verarbeitungseinheit kann dabei innerhalb des dargestellten Speicherverbundes oder außerhalb desselben angeordnet sein.

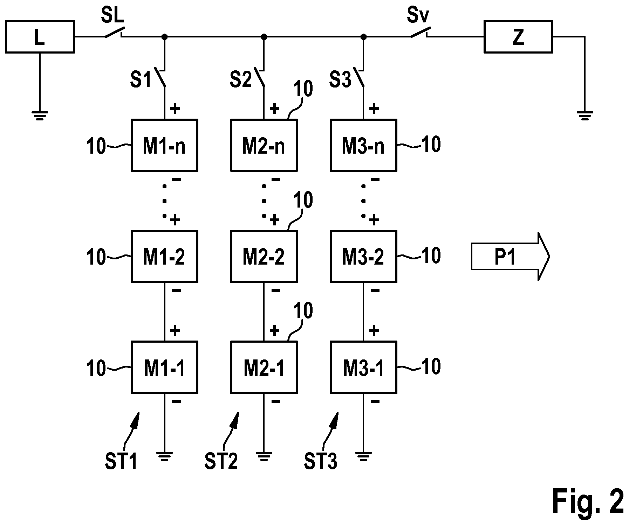

Figur 2 zeigt ein schematisches Schaltbild einer elektrischen Schaltung gemäß einem Ausführungsbeispiel der vorliegenden Erfindung, welche drei parallel geschaltete Stränge ST1, ST2, ST3 von jeweils drei exemplarisch dargestellten UniBB-Modulen 10 (gekennzeichnet mit M1-1 bis M3-n) aufweist. Ein Pfeil P1 deutet an, dass die dargestellten Stränge ST1, ST2, ST3 durch weitere Parallelschaltung zusätzlicher Stränge erweitert und damit der Nennstrom der dargestellten elektrischen Schaltung entsprechend erhöht werden könnte. Die Stränge ST1, ST2, ST3 weisen jeweiligen Schütze S1, S2, S3 auf, mittels welchen sie an eine Stromschiene zwischen einem Ladegerät L und einem elektrischen Verbraucher Z angeschlossen sind. Zwischen dem Ladegerät L und der Stromschiene ist ein erstes Schütz SL angeordnet, während zwischen der Stromschiene und dem elektrischen Verbraucher Z ein zweites Schütz Sv angeordnet ist. Sind alle Schütze S1, S2, S3 geschlossen, können sich die Ströme der drei Stränge bei geeignetem Kontrollverfahren der Module addieren. Die Schütze S1, S2, S3 sind lediglich funktional zu verstehen und können auch durch einen Sperrmodus innerhalb eines Speichermoduls 10 der Stränge ST1, ST2, ST3 realisiert werden. Im Sperrmodus sind alle Schalter (auch "Halbleiterventile") innerhalb des betreffenden Speichermoduls 10 nicht-leitend geschaltet. Prinzipiell ist es so, dass ein Strang als Spannungsquelle und alle anderen Stränge als Stromquelle fungieren müssen, um eine Parallelschaltung zu ermöglichen. Ist die Last eine Spannungsquelle oder beispielsweise eine kapazitive Last, so können auch alle Stränge als Stromquellen betrieben werden. Im Falle der kapazitiven Last werden dann die Ströme so geregelt, dass sich an der Kapazität die gewünschte Spannung einstellt. Über das Ladegerät L können alle Stränge parallel geladen werden. Hierzu sind die Schütze S1, S2, S3, SL geschlossen oder nur die Schütze der zu ladenden Stränge sind geschlossen. Das Ladeverfahren unterscheidet sich fallweise. Wird nur ein Strang geladen, kann das Ladeverfahren so ausfallen, als wäre lediglich ein Strang seriell geschalteter UniBB-Module 10 in der elektrischen Schaltung enthalten. Sollen alle Stränge parallel geladen werden, muss das Ladegerät L als Spannungsquelle fungieren und die Stromkontrolle findet innerhalb der Stränge ST1, ST2, ST3 statt. Dies erfolgt unter der Prämisse, dass keine Ausgleichsströme zwischen den Strängen fließen sollen. Der Vollständigkeit halber sei erwähnt, dass die dargestellte Anordnung auch für eine Parallelschaltung von Strängen anderer Art (z.B. mit Kondensator oder polaritätsvertauschten Modulen, wie sie im Stand der Technik bekannt sind), Verwendung finden könnte und das entsprechende Betriebsverfahren in ähnlicher Weise durchgeführt werden könnte. Charakteristisch für das Betriebsverfahren ist, dass jeweils ein Modul pro Strang als Stromquelle betrieben wird, während der Rest der Module im Spannungsquellenmodus arbeitet oder-je nach momentaner Spannungsanforderung - im Bypassmodus verweilt.

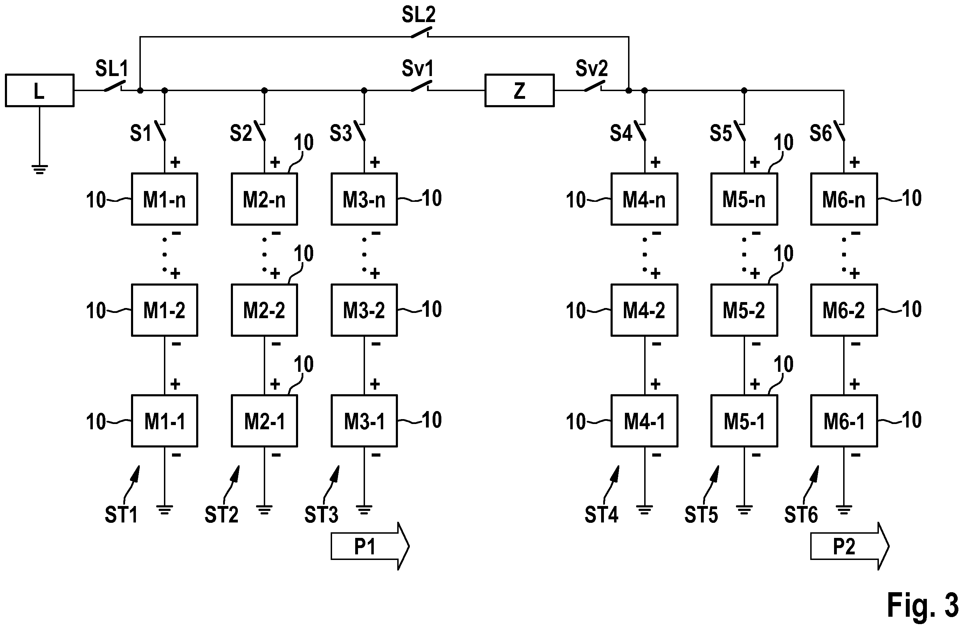

Figur 3 zeigt eine weitere Ausführungsform einer elektrischen Schaltung gemäß der vorliegenden Erfindung. Hierbei sind auf jeder Seite eines elektrischen Verbrauchers Z parallel geschaltete Stränge ST1, ST2, ST3 bzw. ST4, ST5, ST6 dargestellt, welche entsprechend den Pfeilen P1, P2 beliebig durch zusätzliche Stränge erweitert werden könnten. Die UniBB-Module 10 der Stränge ST1, ST2, ST3 bzw. ST4, ST5, ST6 sind mit M1-1 bis M6-n durchnummeriert. Ihre Minuspole sind in Richtung einer jeweiligen Strangmasse orientiert, während ihre Pluspole in Richtung einer jeweiligen gemeinsamen Stromschiene orientiert sind, an welche sie über einen jeweiligen Strangschütz S1, S2, S3 bzw. S4, S5, S6 angeschlossen sind. Zwischen den ersten drei Strängen S1, S2, S3 und den elektrischen Verbraucher Z ist ein Verbraucherschütz Sv1 geschaltet. Zwischen den elektrischen Verbraucher Z und die Stränge S4, S5, S6 ist ein zweites Verbraucherschütz Sv2 geschaltet. Die Stromschienen beiderseits des Verbrauchers Z werden über einen weiteren Schütz SL2 miteinander elektrisch verbunden. Parallel zum ersten Strang ST1 ist ein Ladegerät L über einen Ladegerätschütz SL1 an die Stromschiene angeschlossen. Das Steuerverfahren für die dargestellte elektrische Schaltung in einem Entladungsmodus sieht vor, dass sich entweder die Stränge ST1, ST2, ST3 oder die Stränge ST4, ST5, ST6 im Bypassmodus befinden. Somit können sowohl positive wie auch negative Spannungen und Ströme für den elektrischen Verbraucher Z bereitgestellt. Charakteristisch für das Betriebsverhalten ist auch hier, dass jeweils ein Modul pro Strang im Stromquellenmodus arbeitet, während der Rest der Module desselben Stranges im Spannungsquellenmodus arbeitet oder sich -je nach momentaner Spannungsanforderung - im Bypassmodus befindet. Entsprechend der in Figur 2 dargestellten Anordnung gilt auch hier, dass alle Stränge einer Seite (also die Stränge ST1, ST2, ST3 bzw. die Stränge ST4, ST5, ST6) parallel geladen werden können, indem die Schütze SL1, S1, S2, S3 bzw. S4, S5, S6 in Verbindung mit SL2 geschlossen werden. Selbstverständlich können die Stränge S1, S2, S3, S4, S5, S6 auch einzeln geladen werden, indem der jeweilige Strangschütz S1, S2, S3, S4, S5, S6 in Verbindung mit dem Ladeschütz SL1 bzw. dem zusätzlichen Schütz SL2 geschlossen werden. Sollen alle Stränge parallel geladen werden, muss das Ladegerät L als Spannungsquelle fungieren. Die Stromquelle findet auch in diesem Fall in den Strängen ST1, ST2, ST3 bzw. ST4, ST5, ST6 statt. Auch dies erfolgt unter der Prämisse, dass keine Ausgleichsströme zwischen den einzelnen Strängen ST1, ST2, ST3 bzw. ST4, ST5, ST6 fließen sollen.

Figur 4 zeigt das Schaltbild eines Ausführungsbeispiels eines UniBB-Moduls 10. Über einen ersten Anschluss 11 und einen zweiten Anschluss 12 ist das UniBB-Modul 10 eingerichtet, mit weiteren UniBB-Modulen 10 zu einem Strang zusammengeschaltet zu werden. Zwischen dem ersten Anschluss 11 und dem zweiten Anschluss 12 sind vier Halbleiterschalter T1, T2, T3, T4, welche bevorzugt als MOSFETs oder IGBTs ausgestaltet sind, mit zugehörigen Freilaufdioden D1, D2, D3, D4 angeordnet. Die Halbleiterschalter T1 bis T4 können mit den jeweiligen Freilaufdioden D1 bis D4 als elektrische Zweipole ZP1 bis ZP4 zusammengefasst werden. Dabei ist ein erster Anschluss des ersten Zweipols ZP1 mit einem positiven Anschluss des Energiespeichers 7 verbunden. Ein zweiter Anschluss des ersten Zweipols ZP1 ist einerseits mit einem ersten Anschluss des vierten Zweipols ZP4 und andererseits über eine Induktivität L mit einem ersten Anschluss des zweiten Zweipols ZP2 sowie einem zweiten Anschluss des dritten Zweipols ZP3 verbunden. Ein erster Anschluss des dritten Zweipols ZP3 ist mit dem ersten Anschluss 11 des UniBB-Moduls 10 verbunden. An dem ersten Anschluss 11 ist auch ein erster Anschluss einer Kapazität C angeschlossen, deren zweiter Anschluss mit dem zweiten Anschluss des zweiten Zweipols ZP2 bzw. mit dem zweiten Anschluss des vierten Zweipols ZP4 verbunden ist. Die zweiten Anschlüsse des zweiten Zweipols ZP2 bzw. des vierten Zweipols ZP4 sind einerseits mit dem zweiten Anschluss 12 des UniBB-Moduls 10 und andererseits mit einem zweiten Anschluss des elektrischen Energiespeichers 7 verbunden. Der Energiespeicher 7 liefert eine Modulspannung U_{M}. Das dargestellte UniBB-Modul 10 weist am ersten Anschluss 11 einen positiven Pol (Pluspol) und am zweiten Anschluss 12 einen negativen Pol (Minuspol) auf. Steuerleitungen zur Ansteuerung der Halbleiterschalter T1 bis T4 sind zur Wahrung der Übersicht nicht dargestellt. Gleiches gilt für Stromsensoren. Der elektrische Energiespeicher 7 kann aus einer oder aus mehreren elektrochemischen Zellen oder anderen elektrischen Energiespeichern bestehen, welche in diesem Fall gemeinsam die Modulspannung U_{M} bereitstellen. Das UniBB-Modul 10 kann mehrere verschiedene Betriebszustände annehmen, je nachdem, wie die Halbleiterschalter T1 bis T4 betätigt werden. Insbesondere kann ein Bypass, eine Spannungsquelle im Buck- oder Boost-Modus, eine Stromquelle im Buck- oder Boost-Modus, eine Ladeschaltung sowie eine Sperrung realisiert werden.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Elektrochemischer Speicherverbund umfassend
- parallel geschaltete Stränge (ST1, ST2, ST3, ST4, ST5, ST6) elektrochemischer Speichermodule (10),
- wobei die Speichermodule (10) erste Anschlussklemmen und jeweils eine elektrische Schaltung aufweisen, **dadurch gekennzeichnet, dass** der Speicherverbund mittels der elektrischen Schaltungen eingerichtet ist, die Stränge (ST1, ST2, ST3, ST4, ST5, ST6) innerhalb des elektrochemischen Speicherverbundes wahlweise als Stromquelle oder als Spannungsquelle zu betreiben,
- der elektrochemische Speicherverbund eingerichtet ist, ein erstes Speichermodul (10) eines Stranges (ST1, ST2, ST3, ST4, ST5, ST6) als Stromquelle zu betreiben und ein weiteres Speichermodul (10) desselben Strangs (ST1, ST2, ST3, ST4, ST5, ST6) als Spannungsquelle zu betreiben, wobei der elektrochemische Speicherverbund weiter dazu eingerichtet ist, ein das weitere Speichermodul (10) desselben Strangs (ST1, ST2, ST3, ST4, ST5, ST6) in einem Bypassmodus zu betreiben.

2. Elektrochemischer Speicherverbund nach Anspruch 1, welcher eingerichtet ist, alle weiteren Speichermodule (10) desselben Strangs (ST1, ST2, ST3, ST4, ST5, ST6) als Spannungsquellen oder in einem Bypassmodus zu betreiben.

3. Elektrochemischer Speicherverbund nach einem der Ansprüche 1 oder 2, welcher eingerichtet ist, jeweils einen ersten Strang (ST1, ST2, ST3, ST4, ST5, ST6) als Spannungsquelle und einen zweiten Strang (ST1, ST2, ST3, ST4, ST5, ST6) als Stromquelle zu betreiben.

4. Elektrochemischer Speicherverbund nach Anspruch 3, welcher eingerichtet ist, mit Ausnahme des ersten Strangs (ST1, ST2, ST3, ST4, ST5, ST6) alle Stränge (ST1, ST2, ST3, ST4, ST5, ST6) als Stromquelle oder in einem Sperrmodus zu betreiben.

5. Elektrochemischer Speicherverbund nach einem der vorstehenden Ansprüche, wobei der Betrieb als Stromquelle durch einen Buck- oder einen Boostbetrieb realisiert ist.

6. Elektrochemischer Speicherverbund nach einem der vorstehenden Ansprüche, wobei der Speicherverbund eingerichtet ist, parallele Stränge (ST1, ST2, ST3, ST4, ST5, ST6), insbesondere synchronisiert, als Wechselstromquelle zu betreiben.

7. Elektrochemischer Speicherverbund nach einem der vorstehenden Ansprüche, wobei jeder Strang (ST1, ST2, ST3, ST4, ST5, ST6) einen Schütz (S1, S2, S3, S4, S5, S6) umfasst, über welchen der Strang (ST1, ST2, ST3, ST4, ST5, ST6) eingerichtet ist, in den Speicherverbund eingebunden oder von dem Speicherverbund getrennt zu werden.

8. Elektrochemischer Speicherverbund nach einem der vorstehenden Ansprüche, wobei die Speichermodule (10) universelle Buck-Boost-Module (UniBB-Module) sind, die aus einer oder mehreren Akkumulatorzellen zusammen mit einer eine Induktanz umfassenden Kopplungseinheit bestehen, die jeweils sowohl als Spannungs- wie auch als Stromquelle jeweils verwendbar sind.

9. Elektrische Schaltung umfassend
- einen Verbraucher (Z) und
- einen ersten Speicherverbund (ST1, ST2, ST3) und einen zweiten Speicherverbund (ST4, ST5, ST6) nach einem der vorstehenden Ansprüche,
- wobei der Verbraucher (Z) elektrisch zwischen dem ersten Speicherverbund (ST1, ST2, ST3) und dem zweiten Speicherverbund (ST4, ST5, ST6) angeordnet ist.

## Claims

1. Electrochemical composite storage system comprising
- strings (ST1, ST2, ST3, ST4, ST5, ST6) of electrochemical storage modules (10), which strings are connected in parallel,
- wherein the storage modules (10) have first connection terminals and in each case one electrical circuit, **characterized in that** the composite storage system is designed to operate the strings (ST1, ST2, ST3, ST4, ST5, ST6) within the electrochemical composite storage system selectively as a current source or as a voltage source by means of the electrical circuits,
- the electrochemical composite storage system is designed to operate a first storage module (10) of a string (ST1, ST2, ST3, ST4, ST5, ST6) as a current source, and to operate a further storage module (10) of the same string (ST1, ST2, ST3, ST4, ST5, ST6) as a voltage source, wherein the electrochemical composite storage system is further designed to operate a the further storage module (10) of the same string (ST1, ST2, ST3, ST4, ST5, ST6) in a bypass mode.

2. Electrochemical composite storage system according to Claim 1, which is designed to operate all further storage modules (10) of the same string (ST1, ST2, ST3, ST4, ST5, ST6) as voltage sources or in a bypass mode.

3. Electrochemical composite storage system according to either of Claims 1 and 2, which is designed to operate a first string (ST1, ST2, ST3, ST4, ST5, ST6) as a voltage source and a second string (ST1, ST2, ST3, ST4, ST5, ST6) as a current source.

4. Electrochemical composite storage system according to Claim 3, which is designed to operate all of the strings (ST1, ST2, ST3, ST4, ST5, ST6), with the exception of the first string (ST1, ST2, ST3, ST4, ST5, ST6), as a current source or in a blocking mode.

5. Electrochemical composite storage system according to one of the preceding claims, wherein operation as a current source is realized by buck or boost operation.

6. Electrochemical composite storage system according to one of the preceding claims, wherein the composite storage system is designed to operate parallel strings (ST1, ST2, ST3, ST4, ST5, ST6), in particular in a synchronized manner, as an alternating current source.

7. Electrochemical composite storage system according to one of the preceding claims, wherein each string (ST1, ST2, ST3, ST4, ST5, ST6) comprises a contactor (S1, S2, S3, S4, S5, S6) by means of which the string (ST1, ST2, ST3, ST4, ST5, ST6) is designed to be incorporated into the composite storage system or disconnected from the composite storage system.

8. Electrochemical composite storage system according to one of the preceding claims, wherein the storage modules (10) are universal buck-boost modules (UniBB modules) consisting of one or more rechargeable battery cells together with a coupling unit comprising an inductance, which storage modules can each be used both as a voltage source and as a current source in each case.

9. Electrical circuit comprising
- a load (Z) and
- a first composite storage system (ST1, ST2, ST3) and a second composite storage system (ST4, ST5, ST6) according to one of the preceding claims,
- wherein the load (Z) is arranged electrically between the first composite storage system (ST1, ST2, ST3) and the second composite storage system (ST4, ST5, ST6).

## Revendications

1. Groupement d'accumulateurs électrochimiques, comprenant
- des branches (ST1, ST2, ST3, ST4, ST5, ST6) branchées en parallèle de modules d'accumulateur (10) électrochimiques,
- les modules d'accumulateur (10) possédant des premières bornes de raccordement et respectivement un circuit électrique,
**caractérisé en ce que** le groupement d'accumulateurs est conçu pour, au moyen des circuits électriques, faire fonctionner les branches (ST1, ST2, ST3, ST4, ST5, ST6) à l'intérieur du groupement d'accumulateurs électrochimique au choix en tant que source de courant ou en tant que source de tension,
- le groupement d'accumulateurs électrochimiques est conçu pour faire fonctionner un premier module d'accumulateur (10) d'une branche (ST1, ST2, ST3, ST4, ST5, ST6) en tant que source de courant et pour faire fonctionner un module d'accumulateur (10) supplémentaire de la même branche (ST1, ST2, ST3, ST4, ST5, ST6) en tant que source de tension,
le groupement d'accumulateurs électrochimiques étant en outre conçu pour faire fonctionner un le module d'accumulateur (10) supplémentaire de la même branche (ST1, ST2, ST3, ST4, ST5, ST6) dans un mode de dérivation.

2. Groupement d'accumulateurs électrochimiques selon la revendication 1, lequel est conçu pour faire fonctionner tous les modules d'accumulateur (10) supplémentaires de la même branche (ST1, ST2, ST3, ST4, ST5, ST6) en tant que sources de tension ou dans un mode de dérivation.

3. Groupement d'accumulateurs électrochimiques selon l'une des revendications 1 ou 2, lequel est conçu pour faire fonctionner respectivement une première branche (ST1, ST2, ST3, ST4, ST5, ST6) en tant que source de tension et une deuxième branche (ST1, ST2, ST3, ST4, ST5, ST6) en tant que source de courant.

4. Groupement d'accumulateurs électrochimiques selon la revendication 3, lequel est conçu pour faire fonctionner toutes les branches (ST1, ST2, ST3, ST4, ST5, ST6), à l'exception de la première branche (ST1, ST2, ST3, ST4, ST5, ST6), en tant que source de courant ou dans un mode de blocage.

5. Groupement d'accumulateurs électrochimiques selon l'une des revendications précédentes, le fonctionnement en tant que source de courant étant réalisé par un fonctionnement en dévolteur ou en survolteur.

6. Groupement d'accumulateurs électrochimiques selon l'une des revendications précédentes, le groupement d'accumulateurs électrochimiques étant conçu pour faire fonctionner des branches (ST1, ST2, ST3, ST4, ST5, ST6) parallèles, notamment synchronisées, en tant que source de courant alternatif.

7. Groupement d'accumulateurs électrochimiques selon l'une des revendications précédentes, chaque branche (ST1, ST2, ST3, ST4, ST5, ST6) comportant un contacteur (S1, S2, S3, S4, S5, S6) par le biais duquel la branche (ST1, ST2, ST3, ST4, ST5, ST6) est conçue pour être intégrée dans le groupement d'accumulateurs ou être déconnectée du groupement d'accumulateurs.

8. Groupement d'accumulateurs électrochimiques selon l'une des revendications précédentes, les modules d'accumulateur (10) étant des modules dévolteurs-survolteurs universels (Modules UniBB) qui se composent d'une ou plusieurs cellules d'accumulateur conjointement avec une unité de couplage comprenant une inductance, lesquels peuvent chacun être utilisés respectivement à chaque fois à la fois en tant que source de tension et en tant que source de courant.

9. Circuit électrique comprenant
- un récepteur (Z) et
- un premier groupement d'accumulateurs (ST1, ST2, ST3) et un deuxième groupement d'accumulateurs (ST4, ST5, ST6) selon l'une des revendications précédentes,
- le récepteur (Z) étant disposé électriquement entre le premier groupement d'accumulateurs (ST1, ST2, ST3) et le deuxième groupement d'accumulateurs (ST4, ST5, ST6).
